# EUROPEAN PATENT SPECIFICATION

(11) **EP 3 401 149 B1**
(45) Date of publication and mention of the grant of the patent: **20.07.2022**
(21) Application number: 17170212.9
(22) Date of filing: 09.05.2017
(51) Int. Cl.: B60K 37/06, G06F 3/041

(54) **A METHOD FOR CONTROLLING VEHICLE FUNCTIONALITIES**
VERFAHREN ZUR STEUERUNG VON FAHRZEUGFUNKTIONALITÄTEN
PROCÉDÉ DE COMMANDE DES FONCTIONNALITÉS D'UN VÉHICULE

(43) Date of publication of application: 14.11.2018
(73) Proprietor: Volvo Car Corporation, 40 531 Göteborg (SE)
(72) Inventor: Göthlin, Mr. Jonas, 42343 Torslanda (SE); Persson, Mr. Sven-Olof, 43540 Mölnlycke (SE)
(74) Representative: Kransell & Wennborg KB

(56) References cited:
- WO-A1-2015/049584
- DE-A1-102014 118 957
- DE-A1-102014 204 788
- US-A1- 2011 144 857
- US-B2- 8 264 338

## Description

### TECHNICAL FIELD

The present invention relates to a method for controlling vehicle functionalities by means of a touch interface unit. The invention also relates to a system for controlling vehicle functionalities.

### BACKGROUND

In the field of vehicles, in particularly the field of cars, there is a continuous demand for further vehicle functionalities for the vehicle operator to choose from. The functionalities may relate to various functionalities when the vehicle is standing still and functionalities that can be used when driving the vehicle. For example, when the vehicle is standing still, there may be a desire to control functionalities within the vehicle relating to e.g. operation of audio equipment or functionalities for starting the engine of the vehicle. According to further examples, the vehicle may be equipped with functionalities for e.g. controlling gear shifting and drive modes such as all-wheel drive, etc.

However, providing further functionalities for the operator to control, there is a risk that the operator will not be able to get a sufficient overview of which functions he/she is able to control. Moreover, each of the functionalities is often controlled by means of an operation switch or the like. Hence, increasing the number of functionalities for the operator to choose from, an increased number of operation switches must be provided within the vehicle compartment.

There is thus a desire to be able to control further vehicle functionalities while at the same time not fully occupying the relatively small available space within the vehicle compartment.

US 2011/01444857 relates to an anticipatory and adaptive human machine interface control system for an automobile. DE 10 2014 204 788 relates to an automotive vehicle steering wheel having at least one touch screen display associated therewith. WO 2015/049584 relates to a display controller of information and display control method of information terminal. DE 10 2014 118 957 relates to a method for operating an operator control arrangement for a motor vehicle, in which a touch of at least one button displayed on the operating element is detected as an operating action by an operating element arranged on the steering wheel of the motor vehicle and having a touch-sensitive screen.

The document US 8 264 338 B2 has been considered as closest prior-art document.

### SUMMARY

It is thus an object of the present invention to provide a method which at least partially overcomes the above described deficiencies. This is achieved by a method according to claim 1 and by a corresponding system according to claim 3.

According to a first aspect of the present invention, there is provided a method for controlling vehicle functionalities by means of a touch interface unit arranged in the vehicle compartment of a vehicle according to claim 1.

The wording "vehicle operation mode" should in the following be referred to as a mode for the vehicle. In detail, the vehicle operation mode defines how the vehicle is currently operated. For example, one vehicle operation mode may be that the vehicle is standing still, the door at the driver seat is opened and the driver is taking a seat. Another vehicle operation mode may be that the vehicle is driven and suddenly parked, i.e. the vehicle speed is reduced to zero. Hence, another vehicle operation mode may relate to the vehicle speed and/or the direction of travel, i.e. if the vehicle is reversing or is driven in a forward direction and at which speed. According to a still further example, one vehicle operation mode may be that the vehicle is started but still standing still, i.e. the vehicle speed is zero, or close to zero.

Furthermore, the wording "vehicle functionality" should be understood as one, or several specific functionalities associated with the above described vehicle operation mode. Hence, the wording should be understood such as to relate to different functionalities that can be used for the specific vehicle operation mode. For example, if the vehicle is standing still and the driver is taking a seat, one vehicle functionality can be to start the engine. Another vehicle functionality can be to choose from a number of different drive modes, i.e. to choose between e.g. eco driving, hybrid driving, AWD driving, etc. These examples are of course dependent on the specific vehicle and its pre-set functionalities. After the vehicle is started, a further vehicle functionality may be to choose between automatic or manual gear shifting or if reverse driving is desired. According to a still further example, if the vehicle speed is below a specific limit, such as standing still, a vehicle functionality may be to turn off the engine.

The wording "control function" should thus be interpreted as a function for controlling the vehicle functionality. Hence, if the vehicle functionality is to start the engine, the control function should provide means, preferably in the form of a touch interface, for enabling the operator to start the engine.

An advantage is thus that the operator of the vehicle is provided with specific options for controlling the vehicle, and these options are dependent on the specific operation mode of the vehicle. Hence, the vehicle operator is only given relevant options for controlling the vehicle. By giving the operator the currently available options through a touch interface unit, the number of "buttons" in the vehicle compartment can be reduced. Also, since the number of "buttons" is reduced, an economical advantage is provided for the vehicle.

According to an example embodiment, the vehicle functionality may be determined from a plurality of pre-set vehicle functionalities.

According to the invention, a vehicle operation switch may be arranged in the vehicle compartment at a remote distance from the touch interface unit, wherein the method may further comprise the steps of determining a vehicle speed of the vehicle; comparing the vehicle speed with a predetermined threshold; determining that the current vehicle operating mode is a driving mode for the vehicle if the vehicle speed is higher than the predetermined threshold; and controlling an engine stop function of a vehicle engine to be operated from the vehicle operation switch if the vehicle is in the driving mode.

The vehicle operation switch may thus be a button or the like. It may also be a second touch interface unit, etc. Hereby, if the engine stop function is inhibited from being displayed at the touch interface unit, the vehicle operator may still turn off the engine by operating the vehicle operation switch. This is advantageous in case of emergency where the vehicle engine needs to be shut off.

Hence, according to the invention, the method may further comprise the step of inhibiting the touch interface unit from displaying the functionality associated with the engine stop function if the vehicle is in the driving mode.

According to a second aspect, there is provided a system for controlling vehicle functionalities according to the system claim 3.

According to an example embodiment, the vehicle operating switch may be arranged at an elevated position relative to the touch interface unit.

Hereby, the vehicle operating switch is arranged at a position within the vehicle compartment where it is less likely to accidentally reach it, while at the same time being accessible for the vehicle operator.

According to an example embodiment, the vehicle operation switch may be arranged at a portion of the inner roof of the vehicle compartment in the vicinity of a front window of the vehicle.

According to an example embodiment, the touch interface unit may be positioned in a tunnel console between a driving seat and a passenger seat in the vehicle compartment.

The tunnel console should thus be interpreted as the area between the driver seat and the front passenger seat. An advantage is that a compact module with a plurality of functionalities is arranged at the relatively small area of the tunnel console. Hereby, the touch interface unit may gain access to other functionalities and devices in the tunnel console.

According to an example embodiment, the touch interface unit may be a touch display. Other alternatives are of also conceivable, such as a touch surface having different portions that can be switched on/off, i.e. different portions that cab be controllably highlighted to visually illustrate the above described functionality associated with the at least one control function. Another alternative is touch sensitive control buttons/switches.

Further effects and features of the second aspect are largely analogous to those described above in relation to the first aspect.

Further features of, and advantages with, the present invention will become apparent when studying the appended claims and the following description. The skilled person realize that different features of the present invention may be combined to create embodiments other than those described in the following, without departing from the scope of the present invention.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
Fig. 1 illustrates a vehicle compartment within the vehicle according to an example embodiment;
Figs. 2a - 2c are schematic example embodiments of a touch interface unit arranged within the vehicle compartment depicted in Fig. 1; and
Fig. 3 is a flow chart of a method for controlling vehicle functionalities according to an example embodiment.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

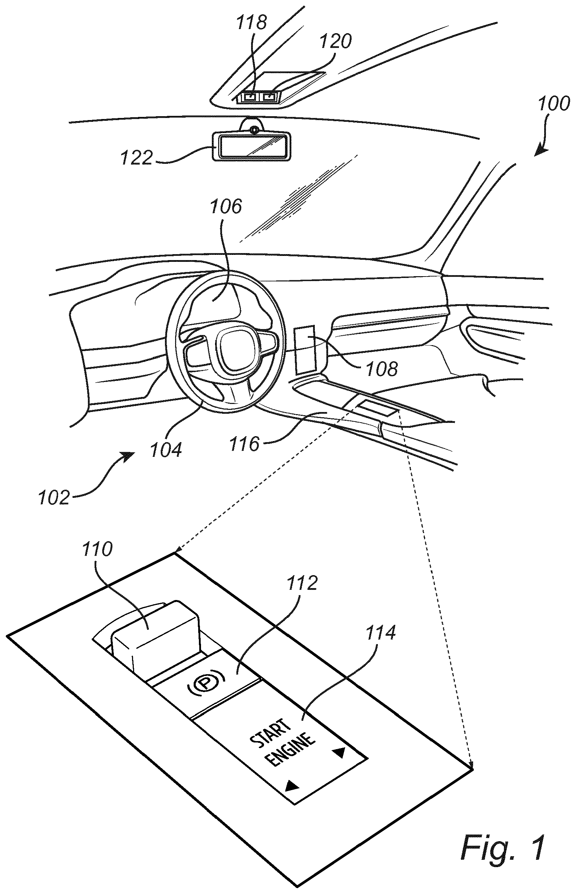

With reference to the example embodiment of Fig. 1, a vehicle 100 in the form of a car is depicted. In detail, Fig. 1 illustrates an example embodiment of the vehicle compartment 102 within the vehicle 100 and thus some of the various devices and arrangements provided therein. For example, the vehicle compartment 102 comprises a steering wheel 104, means 106 for visually depicting vehicle speed and engine speed, i.e. a vehicle speed indicator and an engine speed indicator. The vehicle compartment further comprises an audio system display 108, a gear shifter arrangement 110, a parking brake actuator 112 and a touch interface unit 114. The touch interface unit 114 will be described in further detail below. In particular, the gear shifter arrangement 110, the parking brake actuator 112 and the touch interface unit 114 are arranged at a tunnel console 116 of the vehicle compartment 102, which tunnel console 116 is positioned between the driver seat and the front passenger seat within the vehicle compartment 102.

Furthermore, the vehicle compartment 102 also comprises a vehicle operation switch 118 arranged at a portion of the inner roof of the vehicle compartment in the vicinity of a front window of the vehicle. The vehicle operation switch 118 is arranged for controlling shut-off of the vehicle engine. The engine stop functionality associated with the vehicle operation switch 118 is preferably used for emergency situations. Moreover, the vehicle operation switch 118 is preferably arranged close to the center rearview mirror 122, for example at a position next to the switches 120 for controlling interior lightning within the vehicle compartment 102. Accordingly, the vehicle operation switch 118 is preferably arranged at an elevated position relative to the touch interface unit 114. Hereby, there is a reduced risk of accidentally gaining access to the vehicle operation switch 118.

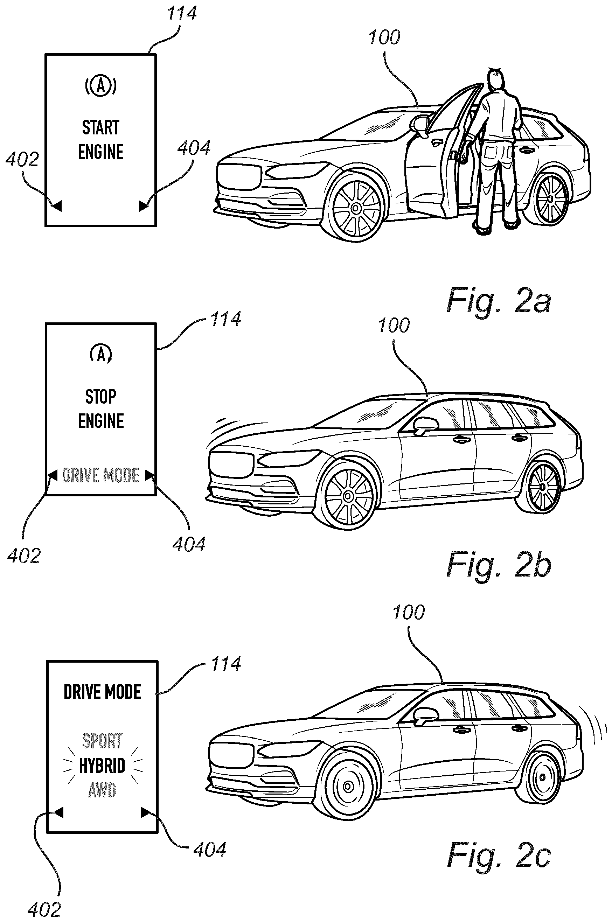

In order to describe the touch interface unit 114 and its functionalities, reference is made to Figs. 2a - 2c. Figs. 2a - 2c illustrate different vehicle functionalities displayed on the touch interface unit 114 in dependence on the vehicle operation mode for the vehicle 100. Accordingly, depending on how the vehicle 100 is operated, the touch interface unit 114 displays different options that can be chosen by the vehicle operator for controlling the vehicle 100 thereof.

Reference is therefore firstly made to Fig. 2a, which illustrates the touch interface unit 114 for a first vehicle operation mode of the vehicle 100. In the first vehicle operation mode, the vehicle 100 stands still and the engine is shut off. Preferably, the first vehicle operation mode should comprise an indication of an operator opening the door for taking a seat at the driver position. The indication may be provided as a signal provided to a control unit (not shown) that the operator of the vehicle has been positioned in the driver seat. This may, for example, be accomplished by a load sensor in the driver seat or a registration that the door at the driver seat was opened and closed.

When it has been determined that the vehicle 100 is in the first vehicle operation mode, the touch interface unit 114 is controlled to only display one or more touch functionalities associated with the first vehicle operation mode. In particular, and with reference to the specific example embodiment depicted in Fig. 2a, when the first vehicle operation mode has been determined, the vehicle functionality associated with the first vehicle operation mode is determined. In the specific case, the vehicle functionality is an engine start functionality of the vehicle 100. A control function for controlling the engine start operation is determined, i.e. for enabling the operator of the vehicle 100 to start the engine is determined. Hereby, the touch interface unit 114 displays touch functionality in the form of an intuitive "start engine" symbol. Other vehicle functionalities may of course be associated with the above described engine start functionality. Hereby, the operator may be able to choose between the different functionalities by, for example, swiping the touch interface unit 114 or touch the indication arrows 402, 404. The touch interface unit 114 may also visually enable different functionalities at different positions on the screen.

With reference to Fig. 2b, another example embodiment is depicted. In Fig. 2b, the vehicle 100 is arranged in a second vehicle operation mode. In the second vehicle operation mode, the vehicle 100 still stands still but the engine has been started. Hereby, vehicle functionalities associated with a non-moving vehicle provided with a started engine is determined. In Fig. 2b, two different examples are illustrated. According to a first example of Fig. 2b, the second vehicle operation mode is that the vehicle is standing still, the engine is running and the gearbox is placed in neutral gear position. Hereby, one vehicle functionality associated with the second vehicle operation mode is vehicle engine shut down, i.e. "a turn off engine" functionality. Hereby, the touch interface unit 114 displays a touch functionality associated with the "turn off engine" functionality, such as a sign visually indicating "STOP ENGINE".

According to a second example of Fig. 2b, the second vehicle operation mode is that the vehicle is standing still, the engine is running and the gearbox is placed in drive gear. Hereby, another vehicle functionality associated with the second vehicle operation mode is a drive mode of the vehicle. In Fig. 2b, it is depicted that the operator is able to choose a hybrid drive mode. The operator may choose between a various numbers of available drive modes before driving away. Accordingly, a plurality of vehicle functionalities relating to the drive mode of the vehicle 100 may be associated with the second vehicle operation mode as well and thus available for the vehicle operator. Such drive modes are described in relation to Fig. 2c below. The drive modes may, in addition to the described hybrid drive mode, be a pure mode (reduction of pollutions), a sport drive mode, off road mode, all-wheel drive mode, etc. The operator of the vehicle may choose between the different drive modes by swiping or pressing the touch interface unit 114.

With reference to Fig. 2c, a still further example embodiment is depicted. In Fig. 2c, the vehicle 100 is arranged in a third vehicle operation mode. In the third vehicle operation mode, the vehicle 100 is driving at a speed above zero, i.e. the vehicle speed is above a predetermined threshold speed limit. Hereby, vehicle functionalities associated with a moving vehicle is determined. According to the example depicted in Fig. 2c, the vehicle 100 is driving and the touch interface unit 114 displays the current drive mode, here illustrated as driving in a hybrid mode. However, other vehicle functionalities may be associated with the third vehicle operation mode, such as e.g. the above described pure mode, off road mode and all-wheel drive mode. The vehicle operator may thus be able to swipe or press the touch interface unit 114 between the different functionalities associated with the third vehicle operation mode for choosing and changing between the drive modes during driving. According to a further example not illustrated in Fig. 2c, another example of a vehicle functionality associated with the third vehicle operation mode may be a sport mode, i.e. to be able to manually shift between gears. When the operator chooses this mode, a plus (+) and a minus (-) indicator may be visually indicated next to the gear shifter arrangement 110. Hereby, the operator is able to manually upshift by pushing the gear shifter arrangement 110 upwards towards the plus-sign, and downshift by pushing the gear shifter arrangement 110 downwards towards the minus-sign.

When the vehicle is arranged in the third vehicle operation mode, i.e. when the vehicle speed is above the predetermined threshold limit, the touch interface unit 114 may preferably be inhibited from displaying the vehicle functionality of shutting off the engine. Hereby, the engine stop functionality is only available at the vehicle operation switch 118.

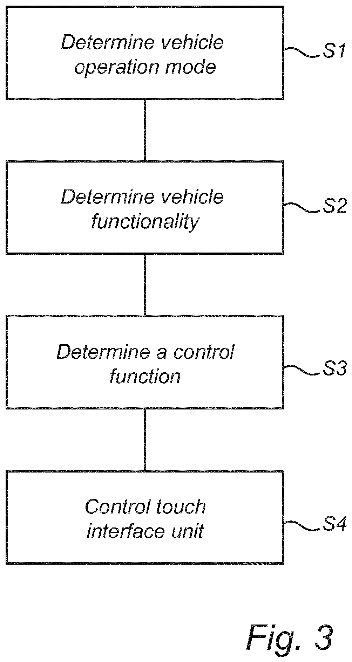

In order to summarize, reference is now made to Fig. 3 which is a flow chart of a method for controlling vehicle functionalities according to an example embodiment. Firstly, a current vehicle operation mode for the vehicle 100 is determined S1. In other words, it is determined how the vehicle is operated. The vehicle operation mode may, for example, be one of the above described first, second or third vehicle operation modes. However, other vehicle operation modes are of course conceivable. For example, another vehicle operation mode may be that the vehicle has reduced its speed to zero and actuated the parking brake.

A vehicle functionality associated with the above determined vehicle operation mode is thereafter determined S2. Hereby, a functionality which is relevant for the determined vehicle operation mode is determined. Thereafter, at least one control function for controlling the vehicle functionality is determined S3. Thus, and with reference to the example depicted in Fig. 2b, the control function may be the stop engine function or the hybrid drive function. The touch interface unit 114 is thus controlled S4 to display a touch functionality, such as e.g. an intuitive symbol, associated with the control function. Hence, and according to the example depicted in Fig. 2b, the touch interface unit 114 displays a touch functionality in the form of an intuitively "stop engine" sign, which "stop engine" sign is connected to the control function for shutting off the vehicle engine.

According to an example embodiment, the method may also comprise the step of inhibiting the touch interface unit from displaying touch functionalities not associated with the at least one control function.

It is to be understood that the present invention is not limited to the embodiments described above and illustrated in the drawings; rather, the skilled person will recognize that many changes and modifications may be made within the scope of the appended claims. For example, the different vehicle operation modes may be associated with other vehicle functionalities than those described above. Also, the method steps should not be construed as being executed in a consecutive order; they may equally as well be executed more or less simultaneously.

## Claims

1. A method for controlling vehicle functionalities by means of a touch interface unit (114) arranged in the vehicle compartment (102) of a vehicle (100), the method comprising the steps of:
- determining (S1) a current vehicle operating mode for the vehicle (100);
- determining (S2) a vehicle functionality associated with the current vehicle operating mode;
- determining (S3), from a predefined number of control functions, at least one control function for controlling the vehicle functionality; and
- controlling (S4) the touch interface unit to display a touch functionality associated with said at least one control function for enabling control of said vehicle functionality associated with the vehicle operating mode,
- determining a vehicle speed of the vehicle (100); and
the vehicle comprising a vehicle operation switch (118) is arranged in the vehicle compartment (102) at a remote distance from the touch interface unit (114), the method is caracterised in that it further comprising the steps of
- comparing the vehicle speed with a predetermined threshold;
- determining that the current vehicle operating mode is a driving mode for the vehicle if the vehicle speed is higher than the predetermined threshold; and
- controlling an engine stop function of a vehicle engine to be operated from the vehicle operation switch (118) if the vehicle is in the driving mode;
- inhibiting the touch interface unit (114) from displaying the functionality associated with the engine stop function if the vehicle (100) is in the driving mode.

2. The method according to claim 1, wherein the vehicle functionality is determined from a plurality of pre-set vehicle functionalities.

3. A system for controlling vehicle functionalities, the system comprises a touch interface unit (114) arranged in the vehicle compartment of the vehicle (100) and a control unit connected to the first touch display unit, said control unit being configured to:
- determine a current vehicle operating mode for the vehicle (100);
- determine a vehicle functionality associated with the current vehicle operating mode;
- determine, from a predefined number of control functions, at least one control function for controlling the vehicle functionality; and to
- control the touch interface unit (114) to display a touch functionality associated with said at least one control function for enabling control of said vehicle functionality associated with the vehicle operating mode, wherein said system further comprises a vehicle operation switch (118) arranged in the vehicle compartment (102) at a remote position from the touch interface unit (114), and wherein the control unit is further configured to:
- determine a vehicle speed of the vehicle (100);
- compare the vehicle speed with a predetermined threshold;
- determine that the current vehicle operating mode is a driving mode for the vehicle (100) if the vehicle speed is higher than the predetermined threshold; and to
- control an engine stop function of a vehicle engine to be operated from the vehicle operation switch (118) if the vehicle is in the driving mode.

4. The system according to claim 3, wherein the vehicle operating switch (118) is arranged at an elevated position relative to the touch interface unit (114).

5. The system according to claim 4, wherein the vehicle operation switch (118) is arranged at a portion of the inner roof of the vehicle compartment (102) in the vicinity of a front window of the vehicle (100).

6. The system according to any one of claims 3-5, wherein the touch interface unit (114) is positioned in a tunnel console (116) between a driving seat and a passenger seat in the vehicle compartment (102).

7. The system according to any one of claims 3-6, wherein the touch interface unit (114) is a touch display.

## Patentansprüche

1. Verfahren zum Steuern von Fahrzeugfunktionalitäten mittels einer Berührungsschnittstelleneinheit (114), die in dem Fahrzeuginnenraum (102) eines Fahrzeugs (100) eingerichtet ist, wobei das Verfahren die folgenden Schritte umfasst:
- Bestimmen (S1) eines aktuellen Fahrzeugbetriebsmodus für das Fahrzeug (100);
- Bestimmen (S2) einer mit dem aktuellen Fahrzeugbetriebsmodus assoziierten Fahrzeugfunktionalität;
- Bestimmen (S3), aus einer vordefinierten Anzahl von Steuerfunktionen, mindestens einer Steuerfunktion zum Steuern der Fahrzeugfunktionalität; und
- Steuern (S4) der Berührungsschnittstelleneinheit zum Anzeigen einer mit der mindestens einen Steuerfunktion assoziierten Berührungsfunktionalität zum Ermöglichen einer Steuerung der mit dem Fahrzeugbetriebsmodus assoziierten Fahrzeugfunktionalität,
- Bestimmen einer Fahrzeuggeschwindigkeit des Fahrzeugs (100); und
wobei das Fahrzeug einen Fahrzeugbetriebsschalter (118) umfasst, der in dem Fahrzeuginnenraum (102) in einer Entfernung von der Berührungsschnittstelleneinheit (114) angeordnet ist, wobei das Verfahren **dadurch gekennzeichnet ist, dass** es ferner die folgenden Schritte umfasst:
- Vergleichen der Fahrzeuggeschwindigkeit mit einer vorbestimmten Schwelle;
- Bestimmen, dass der aktuelle Fahrzeugbetriebsmodus ein Fahrmodus für das Fahrzeug ist, wenn die Fahrzeuggeschwindigkeit höher als die vorbestimmte Schwelle ist; und
- derartigen Steuern, dass eine Motorstoppfunktion eines Fahrzeugmotors von dem Fahrzeugbetriebsschalter (118) betätigt wird, wenn sich das Fahrzeug in dem Fahrmodus befindet;
- Verhindern, dass die Berührungsschnittstelleneinheit (114) die mit der Motorstoppfunktion assoziierte Funktionalität anzeigt, wenn sich das Fahrzeug (100) in dem Fahrmodus befindet.

2. Verfahren nach Anspruch 1, wobei die Fahrzeugfunktionalität aus mehreren voreingestellten Fahrzeugfunktionalitäten bestimmt wird.

3. System zum Steuern von Fahrzeugfunktionalitäten, wobei das System eine Berührungsschnittstelleneinheit (114), die in dem Fahrzeuginnenraum des Fahrzeugs (100) angeordnet ist, und eine Steuereinheit, die mit der ersten Berührungsanzeigeeinheit verbunden ist, umfasst, wobei die Steuereinheit zu Folgendem ausgelegt ist:
- Bestimmen eines aktuellen Fahrzeugbetriebsmodus für das Fahrzeug (100);
- Bestimmen einer mit dem aktuellen Fahrzeugbetriebsmodus assoziierten Fahrzeugfunktionalität;
- Bestimmen, aus einer vordefinierten Anzahl von Steuerfunktionen, mindestens einer Steuerfunktion zum Steuern der Fahrzeugfunktionalität; und zum
- Steuern der Berührungsschnittstelleneinheit (114) zum Anzeigen einer mit der mindestens einen Steuerfunktion assoziierten Berührungsfunktionalität zum Ermöglichen einer Steuerung der mit dem Fahrzeugbetriebsmodus assoziierten Fahrzeugfunktionalität, wobei das System ferner einen Fahrzeugbetriebsschalter (118) umfasst, der in dem Fahrzeuginnenraum (102) in einer Entfernung von der Berührungsschnittstelleneinheit (114) angeordnet ist, und wobei die Steuereinheit ferner zu Folgendem ausgelegt ist:
- Bestimmen einer Fahrzeuggeschwindigkeit des Fahrzeugs (100);
- Vergleichen der Fahrzeuggeschwindigkeit mit einer vorbestimmten Schwelle;
- Bestimmen, dass der aktuelle Fahrzeugbetriebsmodus ein Fahrmodus für das Fahrzeug (100) ist, wenn die Fahrzeuggeschwindigkeit höher als die vorbestimmte Schwelle ist; und zum
- derartigen Steuern, dass eine Motorstoppfunktion eines Fahrzeugmotors von dem Fahrzeugbetriebsschalter (118) betätigt wird, wenn sich das Fahrzeug in dem Fahrmodus befindet.

4. System nach Anspruch 3, wobei der Fahrzeugbetriebsschalter (118) an einer erhöhten Position relativ zu der Berührungsschnittstelleneinheit (114) angeordnet ist.

5. System nach Anspruch 4, wobei der Fahrzeugbetriebsschalter (118) an einem Abschnitt des Innendachs des Fahrzeuginnenraums (102) in der Nähe einer Frontscheibe des Fahrzeugs (100) angeordnet ist.

6. System nach einem der Ansprüche 3-5, wobei die Berührungsschnittstelleneinheit (114) in einer Tunnelkonsole (116) zwischen einem Fahrersitz und einem Beifahrersitz in dem Fahrzeuginnenraum (102) positioniert ist.

7. System nach einem der Ansprüche 3-6, wobei die Berührungsschnittstelleneinheit (114) eine Berührungsanzeige ist.

## Revendications

1. Procédé de commande de fonctionnalités de véhicule au moyen d'une unité d'interface tactile (114) disposée dans l'habitacle de véhicule (102) d'un véhicule (100), le procédé comprenant les étapes de :
- détermination (S1) d'un mode de fonctionnement de véhicule actuel du véhicule (100) ;
- détermination (S2) d'une fonctionnalité de véhicule associée au mode de fonctionnement de véhicule actuel ;
- détermination (S3), parmi un nombre prédéfini de fonctions de commande, d'au moins une fonction de commande pour commander la fonctionnalité de véhicule ; et
- commande (S4) de l'unité d'interface tactile pour afficher une fonctionnalité tactile associée à ladite au moins une fonction de commande pour permettre la commande de ladite fonctionnalité de véhicule associée au mode de fonctionnement de véhicule,
- détermination d'une vitesse de véhicule (100) du véhicule (100) ; et
le véhicule comprenant un commutateur de fonctionnement de véhicule (118) disposé dans l'habitacle de véhicule (102) à distance de l'unité d'interface tactile (114), le procédé étant **caractérisé en ce qu'**il comprend en outre les étapes de :
- comparaison de la vitesse de véhicule à un seuil prédéterminé ;
- détermination que le mode de fonctionnement de véhicule actuel est un mode de conduite du véhicule si la vitesse de véhicule est supérieure au seuil prédéterminé ; et
- commande de l'activation d'une fonction d'arrêt moteur d'un moteur de véhicule à partir du commutateur de fonctionnement de véhicule (118) si le véhicule est dans le mode de conduite ;
- inhibition de l'unité d'interface tactile (114) pour ne pas afficher la fonctionnalité associée à la fonction d'arrêt moteur si le véhicule (100) est dans le mode de conduite.

2. Procédé selon la revendication 1, dans lequel la fonctionnalité de véhicule est déterminée parmi une pluralité de fonctionnalités de véhicule prédéfinies.

3. Système de commande de fonctionnalités de véhicule, le système comprenant une unité d'interface tactile (114) disposée dans l'habitacle de véhicule du véhicule (100) et une unité de commande connectée à la première unité d'affichage tactile, ladite unité de commande étant configurée pour :
- déterminer un mode de fonctionnement de véhicule actuel du véhicule (100) ;
- déterminer une fonctionnalité de véhicule associée au mode de fonctionnement de véhicule actuel ;
- déterminer, parmi un nombre prédéfini de fonctions de commande, au moins une fonction de commande pour commander la fonctionnalité de véhicule; et
- commander l'unité d'interface tactile (114) pour afficher une fonctionnalité tactile associée à ladite au moins une fonction de commande pour permettre la commande de ladite fonctionnalité de véhicule associée au mode de fonctionnement de véhicule, ledit système comprenant en outre un interrupteur de commande de véhicule (118) disposé dans l'habitacle de véhicule (102) à distance de l'unité d'interface tactile (114), et l'unité de commande étant configurée en outre pour :
- déterminer une vitesse de véhicule du véhicule (100) ;
- comparer la vitesse de véhicule à un seuil prédéterminé ;
- déterminer que le mode de fonctionnement de véhicule actuel est un mode de conduite du véhicule (100) si la vitesse de véhicule est supérieure au seuil prédéterminé ; et
- commander l'activation d'une fonction d'arrêt moteur d'un moteur de véhicule à partir du commutateur de fonctionnement de véhicule (118) si le véhicule est dans le mode de conduite.

4. Système selon la revendication 3, dans lequel le commutateur de commande de véhicule (118) est disposé à une position surélevée par rapport à l'unité d'interface tactile (114).

5. Système selon la revendication 4, dans lequel le commutateur de fonctionnement de véhicule (118) est disposé au niveau d'une partie de plafond intérieur de l'habitacle de véhicule (102) à proximité d'une vitre avant du véhicule (100).

6. Système selon l'une quelconque des revendications 3 à 5, dans lequel l'unité d'interface tactile (114) est positionnée dans une console tunnel (116) entre un siège conducteur et un siège passager dans l'habitacle de véhicule (102).

7. Système selon l'une quelconque des revendications 3 à 6, dans lequel l'unité d'interface tactile (114) est un écran tactile.
